# EUROPÄISCHE PATENTSCHRIFT

(11) **EP 4 215 908 B1**
(45) Veröffentlichungstag und Bekanntmachung des Hinweises auf die Patenterteilung: **31.12.2025**
(21) Anmeldenummer: 22152144.6
(22) Anmeldetag: 19.01.2022
(51) Int. Cl.: G01N 27/22

(54) **FEUCHTESENSOR-ANORDNUNG**
MOISTURE SENSOR ASSEMBLY
AGENCEMENT DE CAPTEUR D'HUMIDITÉ

(43) Veröffentlichungstag der Anmeldung: 26.07.2023
(73) Patentinhaber: E+E ELEKTRONIK GES.M.B.H., 4209 Engerwitzdorf (AT)
(72) Erfinder: HAIDER, Albin, 4211 Alberndorf (AT)
(74) Vertreter: Hofmann, Ernst

(56) Entgegenhaltungen:
- EP-A1- 3 364 181
- EP-B1- 3 206 027
- US-A1- 2020 158 674

## Beschreibung

### GEBIET DER TECHNIK

Die vorliegende Erfindung betrifft eine Feuchtesensor-Anordnung.

### STAND DER TECHNIK

Aus der EP 2 755 023 A1 ist eine Feuchtesensor-Anordnung bekannt, die einen integrierten Signalverarbeitungsbaustein umfasst, auf dem ein kapazitiver Feuchtesensor angeordnet ist. Der kapazitive Feuchtesensor ist als Plattenkondensator mit einer flächigen Grundelektrode und einer gasdurchlässigen, flächigen Deckelektrode ausgebildet, zwischen denen eine dielektrische Messschicht angeordnet ist, die eine feuchteabhängige Kapazität besitzt. Um den Signalverarbeitungsbaustein und den kapazitiven Feuchtesensor herum wird eine Umkapselung bzw. Vergussmasse angeordnet, um die Anordnung gegenüber mechanischer Beschädigung und den Signalverarbeitungsbaustein gegenüber Feuchtigkeit zu schützen. Im Bereich der Deckelektrode weist die Umkapselung eine Ausnehmung auf, über die das umgebende Medium in Kontakt mit der porösen Deckelektrode gelangen kann. Die erzeugten Messsignale werden im Signalverarbeitungsbaustein weiterverarbeitet und können dabei z.B. auch geeignet für eine Übertragung an eine Folgeelektronik aufbereitet werden.

Wird eine solche Feuchtesensoranordnung auf einer Platine angeordnet, so kann es bei der weiteren Verarbeitung der Platine zu unkontrollierten elektrostatischen Entladungen (Electrostatic Discharge, ESD) kommen. Derartige Entladungen können die Bauelemente auf der Platine zerstören. Ferner kann auch die Feuchtesensor-Anordnung selbst und dabei insbesondere der Signalverarbeitungsbaustein beschädigt werden, wenn es zu einer Entladung im Bereich der Ausnehmung der Umkapselung kommt.

In der EP 3 364 181 A1 wird daher vorgeschlagen, ein niederohmiges, elektrisch leitfähiges Ableitelement im Bereich der Ausnehmung anzuordnen, über das ein eventueller Entladestrom definiert ableitbar ist. Auf diese Art und Weise bleiben empfindliche Bereiche des Signalverarbeitungsbausteins ungefährdet. Das Ableitelement besteht aus einer dünnen Metallschicht, die im Bereich der Ausnehmung zwei spitz zulaufende Teilbereiche aufweist, welche in Richtung des Zentrums der Ausnehmung orientiert sind.

Alternative Lösungen für elektrisch leitfähige Ableitelemente in integrierten Sensorvorrichtungen sind weiterhin aus der EP 3 206 027 B1 bekannt.

### ZUSAMMENFASSUNG DER ERFINDUNG

Der vorliegenden Erfindung liegt die Aufgabe zugrunde, eine Feuchtesensor-Anordnung anzugeben, die einen nochmals verbesserten Schutz gegen unkontrollierte elektrostatische Entladungen aufweist.

Diese Aufgabe wird erfindungsgemäß durch eine Feuchtesensor-Anordnung mit den Merkmalen des Anspruchs 1 gelöst.

Vorteilhafte Ausführungen der erfindungsgemäßen Feuchtesensor-Anordnung ergeben sich aus den Maßnahmen, die in den abhängigen Ansprüchen aufgeführt sind.

Die erfindungsgemäße Feuchtesensor-Anordnung umfasst einen integrierten Signalverarbeitungsbaustein, auf dem mindestens ein kapazitiver Feuchtesensor angeordnet ist. Eine Umkapselung umgibt den Signalverarbeitungsbaustein teilweise und weist im Bereich des Feuchtesensors eine Ausnehmung auf. Mindestens ein elektrisch leitfähiges Ableitelement ist im Bereich der Ausnehmung angeordnet und als dreidimensionales Bondelement ausgebildet, welches eine annähernd kreisförmige Grundfläche besitzt und sich nach oben verjüngt. In der Ausnehmung ist über dem Feuchtesensor das Bondelement sowie eine gasdurchlässige Schutzschicht angeordnet.

Dabei kann vorgesehen sein, dass das Bondelement eine sich nach oben verjüngende dornförmige Form mit einer Spitze aufweist.

Es ist möglich, dass das Bondelement aus Gold oder Kupfer besteht.

Dabei kann die Schutzschicht über dem Bondelement die geringste Dicke aufweisen.

Vorzugsweise weist die Schutzschicht in der Ausnehmung eine maximale Dicke von 150µm auf.

Es ist möglich, dass das Bondelement eine leitende Verbindung zu einem Masse-Kontaktierungsbereich eines Systemträgers besitzt, um einen Entladestrom gegen Masse abzuleiten.

Dabei kann vorgesehen sein, dass auf dem Signalverarbeitungsbaustein eine ganzflächige Passivierungsschicht angeordnet ist und über der Passivierungsschicht zumindest teilweise eine flächige, elektrisch leitfähige Ableitschicht angeordnet ist, die einen Teil der leitenden Verbindung zwischen dem Bondelement und dem Masse-Kontaktierungsbereich bildet.

Hierbei kann das Bondelement auf einem Teilbereich der Ableitschicht angeordnet sein.

Ferner ist möglich. dass eine leitende Verbindung zwischen der Ableitschicht und dem Masse-Kontaktierungsbereich des Systemträgers über einen auf der Ableitschicht angeordneten Bondball und einen Bonddraht zwischen dem Bondball und dem Masse-Kontaktierungsbereich ausgebildet ist.

Desweiteren kann ein kapazitiven Feuchtesensor vorgesehen sein, bestehend aus
- mindestens einer auf der Passivierungsschicht des Signalverarbeitungsbausteins angeordneten flächigen Grundelektrode, die aus einem vom Teilbereich mit dem Bondelement getrennten Teilbereich der Ableitschicht besteht, und
- einer über der Grundelektrode zumindest im Bereich der Ausnehmung angeordneten Messschicht, deren Kapazität sich feuchteabhängig ändert, sowie
- mindestens einer oberhalb der Messschicht angeordneten, gasdurchlässigen, flächigen Deckelektrode.

Dabei kann die Ausnehmung einen kreisförmigen Querschnitt aufweisen und die Grundelektrode und die Deckelektrode im Bereich der Ausnehmung jeweils zwei Kreissegmente umfassen, die einander spiegelsymmetrisch gegenüberliegen.

Über die erfindungsgemäßen Maßnahmen kann nunmehr besonders zuverlässig verhindert werden, dass es im Fall unkontrollierter elektrostatischer Entladungen im Umfeld der Feuchtesensor-Anordnung nicht zu einer Beschädigung und einem Ausfall des Signalverarbeitungsbausteins kommt. Eine eventuelle elektrostatische Entladung auf den hochohmigen Feuchtesensor bzw. den Signalverarbeitungsbaustein wird vermieden und der resultierende Entladestrom anderweitig definiert abgeleitet. Der Entladestrom wird damit insbesondere nicht innerhalb des Signalverarbeitungsbausteins geleitet, sondern über das Bondelement und dessen Masse-Anschluss abgeleitet. Auf diese Art und Weise lassen sich schnelle Spannungsabfälle und deren kapazitive Kopplungen innerhalb des Signalverarbeitungsbausteins vermeiden, die ansonsten durch den Entladestrom verursacht würden; es resultiert ein robustes Design des Signalverarbeitungsbausteins.

Zum Aufbringen des Ableitelements in Form eines dreidimensionalen Bondelements ist kein separater Prozessschritt erforderlich. So kann dies während des Wire-Bond-Kontaktierungsprozesses für den Signalverarbeitungsbaustein erfolgen, wenn dieser über Bonddrähte mit einem Systemträger verbunden wird. Um das Ableitelement aufzubringen ist dabei lediglich ein zusätzliches Bondelement an der entsprechenden Stelle zu platzieren.

Auch bei eventuellen Prozessschwankungen im Zusammenhang mit der Ausbildung der Ausnehmung in der Umkapselung oder Prozessschwankungen beim Aufbringen der feuchtedurchlässigen Schutzschicht ist nunmehr gewährleistet, dass am Ableitelement bzw. Bondelement die geringste Durchschlagfestigkeit der Schutzschicht im Fall elektrostatischer Entladungen vorliegt und Entladeströme über das Bondelement zuverlässig ableitbar sind.

Grundsätzlich erweist sich die erfindungsgemäße Lösung als sehr vorteilhaft, wenn die Schutzschicht in der Ausnehmung nicht gleichmäßig dick ausgebildet ist. Auch in diesem Fall ist eine zuverlässige Ableitung von Entladeströmen sichergestellt.

Weitere Einzelheiten und Vorteile der vorliegenden Erfindung seien anhand der nachfolgenden Beschreibung eines Ausführungsbeispiels der erfindungsgemäßen Feuchtesensor-Anordnung in Verbindung mit den Figuren erläutert.

### KURZE BESCHREIBUNG DER ZEICHNUNGEN

Es zeigt
- Figur 1a - 1c: jeweils eine unterschiedliche Ansicht eines Ausführungsbeispiels der erfindungsgemäßen Feuchtesensor-Anordnung;
- Figur 2: eine perspektivische Schnittansicht des Ausführungsbeispiels aus den Figuren 1a - 1c;
- Figur 3: eine Detail-Schnittansicht des Ausführungsbeispiels aus den Figuren 1a - 1c;
- Figur 4: eine Draufsicht auf die Ableitebene des Ausführungsbeispiels aus den Figuren 1a - 1c;
- Figur 5: eine weitere Detail-Schnittansicht des Ausführungsbeispiels aus den Figuren 1a - 1c;
- Figur 6a: eine perspektivische Absicht des Bondelements;
- Figur 6b: eine schematisierte Schnittansicht des Bondelements mit Dimensionierungsangaben.

### BESCHREIBUNG DER AUSFÜHRUNGSFORMEN

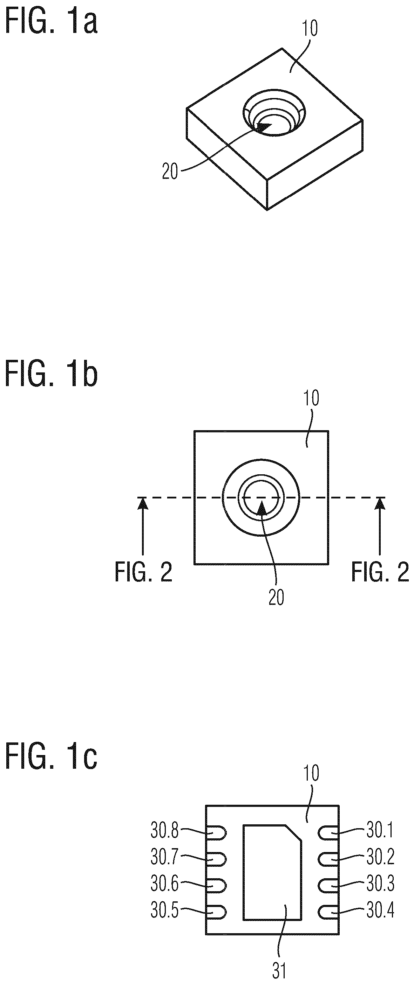

Ein Ausführungsbeispiel der erfindungsgemäßen Feuchtesensor-Anordnung wird im Folgenden anhand der Figuren 1a - 6b beschrieben.

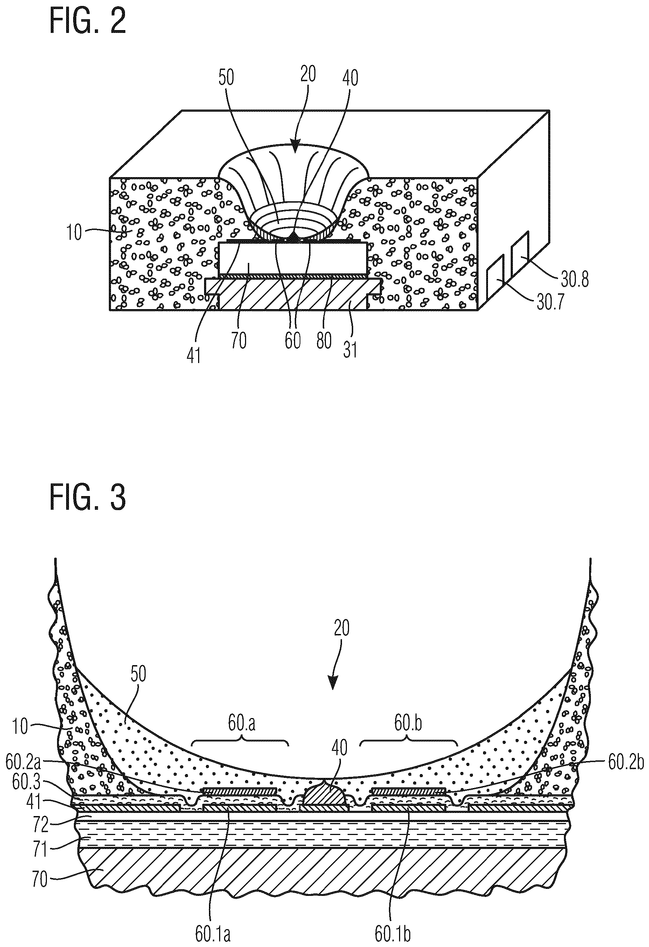

Die Figuren 1a - 1c zeigen jeweils unterschiedliche Ansichten einer erfindungsgemäßen Feuchtesensor-Anordnung; weitere Details dieses Ausführungsbeispiels ergeben sich aus den Darstellungen der weiteren Figuren 2 - 6b, die unterschiedliche Schnittansichten und Einzelheiten desselbigen zeigen.

Die erfindungsgemäße Sensor-Anordnung umfasst einen integrierten Signalverarbeitungsbaustein bzw. ASIC, auf dem mindestens ein kapazitiver Feuchtesensor angeordnet ist. Eine Umkapselung bzw. Gehäuse umgibt den Signalverarbeitungsbaustein teilweise und weist im Bereich des Feuchtesensors eine Ausnehmung auf. Der Feuchtesensor besteht im Wesentlichen aus einer ein- oder mehrteiligen, flächigen Grundelektrode, einer oberhalb der Grundelektrode angeordneten Messschicht mit feuchteabhängiger Kapazität und einer oberhalb der Messschicht angeordneten gasdurchlässigen, ein- oder mehrteiligen flächigen Deckelektrode. Mit Hilfe des Feuchtesensors werden feuchteabhängige Signale erzeugt, die das Gas charakterisieren, welches die Sensor-Anordnung umgibt und die vom Signalverarbeitungsbaustein in weiterverarbeitbare Feuchtemesswerte umgewandelt werden. Die Feuchtemesswerte können dann von einer nachgeordneten, nicht dargestellten, Folgeelektronik in verschiedenster Art und Weise weiterverarbeitet werden.

In den Figuren 1a - 1c ist die Umkapselung 10 erkennbar, die den Signalverarbeitungsbaustein inklusive Feuchtesensor mindestens teilweise umgibt. Über die Umkapselung 10 wird der Signalverarbeitungsbaustein sowohl gegenüber mechanischen Einflüssen als auch gegen Feuchtigkeit geschützt. Aus den Figuren 1a, 1b ist dabei auch die oben erwähnte Ausnehmung 20 in der Umkapselung ersichtlich, über die ein Zugang des umgebenden Gases zum Feuchtesensor hergestellt wird. Im dargestellten Ausführungsbeispiel besitzt die Ausnehmung 20 einen kreisförmigen Querschnitt und verengt sich trichterförmig bzw. kraterförmig von der Oberseite der Umkapselung 10 hin zum Feuchtesensor bzw. zur Deckelektrode des kapazitiven Feuchtesensors. Die Formgebung der Umkapselung 10 erfolgt im Verlauf eines Transfer-Molding-Herstellungsprozesses derart, dass eine Quaderform der erfindungsgemäßen Feuchtesensor-Anordnung resultiert; als Material für die Umkapselung 10 dient z.B. Epoxidharz mit einer Füllung aus Glaskugeln.

Weiterhin ist in der Ansicht der Unterseite der beispielhaften Feuchtesensor-Anordnung in Figur 1c ein zentrales Wärmeleitpad 31 (Thermal Pad) sowie die Kontaktierungsbereiche 30.1 - 30.8 eines Systemträgers (Leadframe) zu erkennen, über die die Feuchtesensor-Anordnung elektrisch kontaktiert wird. Auf dem Wärmeleitpad 31 ist wie aus den Figuren 2, 4 und 5 ersichtlich der Signalverarbeitungsbaustein 70 bzw. ASIC angeordnet und wird über eine Klebeschicht 80 fixiert. Die elektrische Kontaktierung des Signalverarbeitungsbausteins 70 erfolgt über Bonddrähte 90.1 - 90.8, die zwischen den Kontaktierungsbereichen 70.1 - 70.8 bzw. Bondpads des Signalverarbeitungsbausteins 70 und den Kontaktierungsbereichen 30.1 - 30.8 bzw. Bondpads des Systemträgers 30 angeordnet sind.

Der grundsätzliche Aufbau des dargestellten Ausführungsbeispiels der erfindungsgemäßen Feuchtesensor-Anordnung entspricht damit einem sog. DFN Package (Dual Flat No Lead Package).

In der Ausnehmung 20 der Umkapselung 10 ist oberhalb des kapazitiven Feuchtesensors desweiteren eine elektrisch isolierende und gasdurchlässige Schutzschicht 50 angeordnet; hierzu sei etwa auf die Figuren 2 und 3 verwiesen. Die Schutzschicht 50 besitzt vorzugsweise hydrophobe bzw. wasserabweisende Eigenschaften und erstreckt sich über den gesamten Bereich der Ausnehmung 20. Über die Schutzschicht 50 werden insbesondere sämtliche metallischen Strukturen der erfindungsgemäßen Feuchtesensor-Anordnung gegenüber äußeren Einflüssen wie Schmutz oder Flüssigkeiten geschützt; gleichzeitig ist über die Gasdurchlässigkeit der Schutzschicht 50 sichergestellt, dass Gas - wie etwa feuchte Luft - aus der Umgebung zum Feuchtesensor gelangen kann.

Wie aus der Schnittdarstellung der Figur 3 ersichtlich, wird der Signalverarbeitungsbaustein 70 auf seiner Oberseite, die dem Feuchtesensor 60 zugewandt ist, ganzflächig durch eine Verdrahtungs-Ebene 71 begrenzt. Über diese Ebene 71 werden die elektrischen Verbindungen zwischen den verschiedenen Halbleiter-Komponenten im Signalverarbeitungsbaustein 70 hergestellt. In der Verdrahtungsebene 71 sind desweiteren auch die Kontaktierungsbereiche 70.1 - 70.8 des Signalverarbeitungsbausteins 70 angeordnet, über die dieser mit dem Systemträger 30 bzw. dessen Kontaktierungsbereichen 30.1 - 30.8 verbunden wird.

Oberhalb der Verdrahtungsebene 71 des Signalverarbeitungsbausteins 70 ist im dargestellten Ausführungsbeispiel eine ganzflächige Passivierungsschicht 72 angeordnet, die etwa aus einer ersten Teilschicht SiO₂ und einer zweiten Teilschicht SiON ausgebildet ist und zum Schutz der darunterliegenden Schichten und Komponenten gegenüber Umwelteinflüssen dient. Die Passivierungsschicht 72 überdeckt dabei wie aus Figur 3 ersichtlich nahezu die komplette Oberseite des Signalverarbeitungsbausteins 70. Lediglich unterhalb von dessen Kontaktierungsbereichen 70.1 - 70.8 und den Kontaktierungsbereichen 61.1a, 62.1a, 61.1b, 62.1b des Feuchtesensors weist die Passivierungsschicht 72 Ausnehmungen auf, um die Kontaktierungsbereiche 70.1 - 70.8 elektrisch leitend mit dem Signalverarbeitungsbaustein 70 bzw. dessen Verdrahtungsebene 71 zu verbinden bzw. den Feuchtesensor 60 mit dem Signalverarbeitungsbaustein zu verbinden.

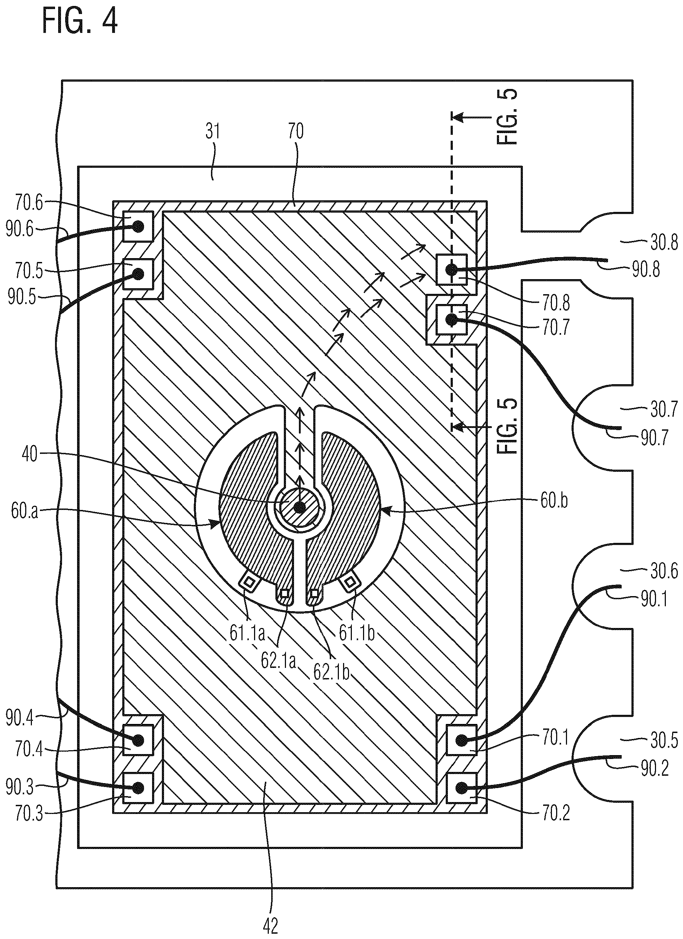

Über der Passivierungsschicht 72 ist im Bereich der Ausnehmung 20 der Feuchtesensor 60 in der erfindungsgemäßen Anordnung angeordnet, der als kapazitiver Feuchtesensor 60 in Form eines Plattenkondensators ausgebildet ist. Im dargestellten Ausführungsbespiel besteht der Feuchtsensor60 wie aus den Figuren 3 und 4 ersichtlich aus zwei kreissegmentförmigen Feuchtesensor-Bereichen 60.a, 60.b, die einander spiegelsymmetrisch mit einem bestimmten Abstand gegenüberliegen und einen großen Teil der Ausnehmungs-Projektion einnehmen. Die Grundelektroden 60.1a, 60.1b der beiden Feuchtesensor-Bereiche 60.a, 60.b sind dabei jeweils in einer über der Passivierungsschicht 72 liegenden Ebene 41 angeordnet. Als Material für die Grundelektroden 60.1a, 60.1b ist ein geeignetes elektrisch leitfähiges Material wie etwa Metall vorgesehen, möglich ist hierbei z.B. die Verwendung von Gold; die Schichtdicke der Ebene 40 beträgt ca. 0,5µm. Über der Ebene 40 mit den Grundelektroden 60.1a, 60.1b ist in der Ausnehmung 20 bis auf einen zentralen Bereich die feuchteempfindliche Messschicht 60.3 angeordnet, die aus einem Material mit einer feuchteabhängigen Kapazität besteht, etwa ein geeignetes Dielektrikum wie z.B. Polyimid; die Dicke der Messschicht 60.3 beträgt ca. 0,6µm. In einer weiteren Ebene über der Messschicht 60.3 sind schließlich die Deckelektroden 60.2a, 60.2b der beiden Feuchtesensor-Bereiche 60.a, 60.b angeordnet. Die Deckelektroden 60.2a, 60.2b bestehen vorzugsweise aus einem feuchte- bzw. gasdurchlässigen, elektrisch leitfähigen Material. Hierzu kann ebenfalls ein Metall eingesetzt werden, das geeignete Öffnungen aufweist, um die Feuchtdurchlässigkeit zu gewährleisten, beispielsweise Chrom mit einer Schichtdicke im Bereich [50nm - 500nm]. Die Geometrie der beiden Deckelektroden 60.2a, 60.2b entspricht derjenigen der Grundelektroden 60.1a, 60.1b, d.h. im Bereich der Ausnehmung 20 sind zwei kreissegmentförmige Deckelektroden 60.2a, 60.2b vorgesehen, die einander in einem bestimmten Abstand spiegelsymmetrisch gegenüberliegen.

Mit den Bezugszeichen 61.1a, 61.1b sind in Figur 4 ferner die Kontaktierungsbereiche der Grundelektroden 60.1a, 60.1b bezeichnet, über die diese mit der Verdrahtungsebene 71 verbunden werden. Über die Bezugszeichen 62.1a, 62.1 werden die Kontaktierungsbereiche der beiden Deckelektroden 60.2a, 60.2b, über welche diese mit der Verdrahtungsebene 71 verbunden sind.

Der kapazitive Feuchtesensor 60 wird in bekannter Art und Weise betrieben, wobei aus der Bestimmung der sich feuchteabhängig ändernden Kapazität der Messschicht 60.3 entsprechende Feuchte-Messwerte erzeugt werden können.

Oberhalb der Deckelektroden 60.2a, 60.2b des Feuchtesensors 60 ist wie bereits oben erwähnt die Schutzschicht 50 in der Ausnehmung 20 angeordnet. Wie etwa aus Figur 3 ersichtlich, weist die Schutzschicht 50 dabei eine vom Zentrum nach außen hin jeweils zunehmende Dicke auf.

In einem zentralen Bereich der Ausnehmung 20 ist ferner ein Ableitelement 40 angeordnet, das aus einem elektrisch leitfähigen Material besteht, z.B. Gold oder Kupfer. Über das Ableitelement 40 ist im Fall einer elektrostatischen Entladung in der Nähe der Feuchtesensor-Anordnung sichergestellt, dass der dabei resultierende Entladestrom mindestens insoweit ableitbar ist, dass empfindliche Bereiche des darunter liegenden Signalverarbeitungsbausteins 70 ungefährdet bleiben. Eine eventuelle elektrostatische Entladung wird damit auf das Ableitelement 40 stattfinden und nicht auf den hochohmigen Feuchtesensor 60 und den damit elektrisch leitend verbundenen Signalverarbeitungsbaustein 70.

Das Ableitelement 40 ist in der erfindungsgemäßen Feuchtesensor-Anordnung als dreidimensionale Struktur in Form eines Bondelements ausgebildet, das auf einem Teilbereich der oben erwähnten Ebene 41 angeordnet ist, in der die Grundelektroden 60.1a, 60.1b des Feuchtesensors 60 ausgebildet sind. Die entsprechende Ebene sei deshalb nachfolgend auch als Ableitebene 41 bezeichnet. In der Ableitebene 41 ist neben den Grundelektroden 60.1a, 60.1b eine flächige, ebenfalls elektrisch leitfähige Ableitschicht 42 angeordnet, die aus dem gleichen Material wie die Grundelektroden 60.1a, 60.1b besteht. Wie aus Figur 4 ersichtlich, ist die Ableitschicht 42 dabei elektrisch isoliert bzw. getrennt von den denjenigen Teilbereichen der Ableitebene ausgebildet, die die Grundelektroden 60.1a, 60.1b des Feuchtesensors 60 bilden. Über die Ableitschicht 42 ist das Ableitelement 40 mit einem der Kontaktierungsbereiche 30.8 des Systemträgers 30 elektrisch leitend verbunden, über den ein eventueller Entladestrom gegen Masse ableitbar ist. Hierzu ist die Ableitschicht 42 einerseits in einem zentralen Bereich zwischen den kreissegmentförmigen Feuchtesensor-Bereichen 60.a, 60.b mit dem Ableitelement 40 verbunden. Andererseits ist die Ableitschicht 42 über eine Bondverbindung mit einen Bonddraht 90.8 und einen Kontaktierungsbereich 70.8 auf dem Signalverarbeitungsbaustein 70 mit einem Kontaktierungsbereich 30.8 des Systemträgers 30 vorgesehen. Der entsprechende Kontaktierungsbereich 30.8 des Systemträgers 30 wird im Folgenden als Masse-Kontaktierungsbereich 30.8 bezeichnet. Über die in Figur 4 erkennbaren Pfeile soll ein Entladestrom angedeutet werden, der vom Ableitelement 40 über die Ableitschicht 42, den Bonddraht 90.8 und den Masse-Kontaktierungsbereiche 30.8 definiert abgeleitet wird.

Wie aus Figur 3 ersichtlich, weist die Schutzschicht 50 in der Ausnehmung über dem Ableitelement 40 die geringste Dicke auf.. Die Schutzschicht 50 kann in der der Ausnehmung 20 damit eine maximale Dicke bis zu 150µm aufweisen, wobei die größte Dicke üblicherweise am Rand der Ausnehmung 20 vorliegt. Im Bezug zum Ort der Entstehung einer elektrischen Entladung bzw. eines ESD-Impulses ist grundsätzlich vorteilhaft, wenn der IsolationsWiderstand der Schutzschicht 50 oberhalb des Feuchtesensors 60 größer ist als der Isolationswiderstand über dem Ableitelement 40. Auf diese Art und Weise ist sichergestellt, dass im Fall unkontrollierter elektrostatischer Entladungen der Entladestrom ausschließlich über das Ableitelement 40 und damit zum Masse-Kontaktierungsbereich 30.8 hin abgeleitet werden kann, ohne die darunter liegenden, empfindlichen Komponenten der Feuchtesensor-Anordnung zu beschädigen.

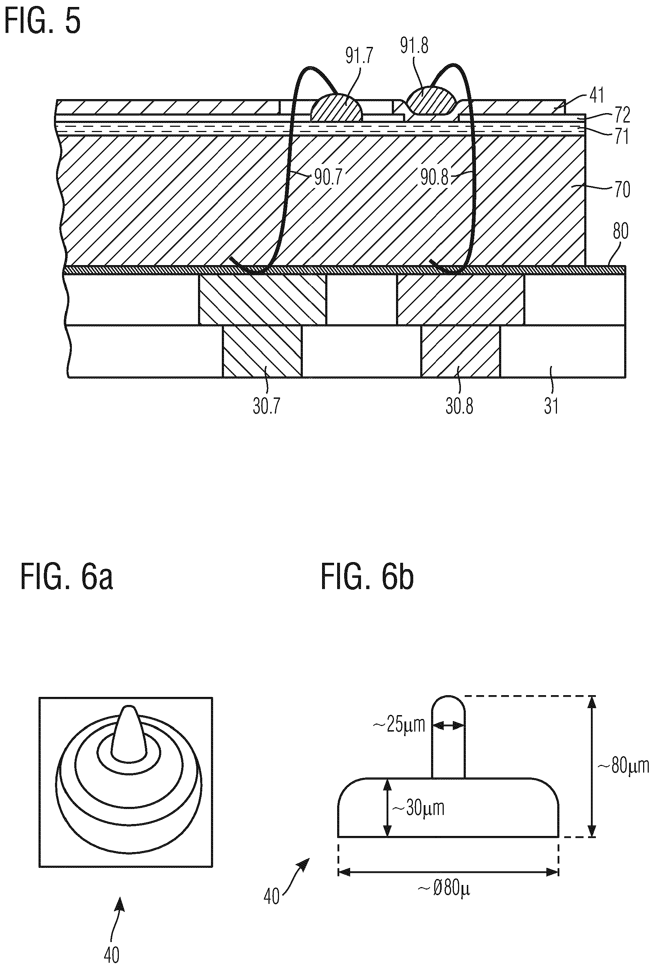

Das Ableitelement 40 ist wie bereits erwähnt als dreidimensionales Bondelement ausgebildet, das mitunter auch als "Stud Bump" oder "Wire Ball" bezeichnet und zur Herstellung von Bondverbindungen zwischen elektrischen Komponenten genutzt wird. Ein derartiges Bondelement, das in Figur 5a in einer perspektivischen Ansicht gezeigt ist, besitzt eine annähernd kreisförmige Grundfläche und weist eine sich nach oben verjüngende Form auf. Im dargestellten Ausführungsbeispiel ist eine dornenartige Form mit einer Spitze vorgesehen. Typische Abmessungen eines derartigen dornförmigen Bondelements in der erfindungsgemäßen Anordnung sind in Figur 5b angegeben.

Alternativ zu der in Figur 5a gezeigten Form eines Ableitelements mit einer Spitze kann auch vorgesehen sein, dass im oberen Teil des Ableitelements die Spitze entfällt und stattdessen ein abgeflachter oder abgerundeter Bereich das Ableitelement nach oben begrenzt.

Ein derartiges Bondelement in Form einer dreidimensionalen Struktur kann in einfacher Art und Weise während des erforderlichen Wire-Bond-Prozesses bei der Fertigung erzeugt werden, bei dem die Kontaktierungsbereiche 70.1 - 70.8 des Signalverarbeitungsbausteins 70 über die Bonddrähte 90.1 - 90.8 mit den Kontaktierungsbereichen 30.1 - 30.8 auf dem Systemträger 30 bzw. Leadframe verbunden werden. Ein separater Prozessschritt ist für die Aufbringung des Ableitelements 40 in der erfindungsgemäßen Feuchtesensor-Anordnung somit nicht erforderlich.

Im Rahmen eines solchen Prozesses wird zur Erzeugung entsprechender Bondelemente eine Spitze eines sogenannten Ball-Wedge-Bonders über dem gewünschten Teilbereich der Ableitschicht 42 platziert und anschließend ein aus der Spitze hinausragender Draht aus dem Bondelement-Material erhitzt, so dass das Bondelement-Material schmilzt und durch die Oberflächenspannung eine Kugel gebildet wird. Diese Kugel kann dann z.B. mit einem kurzen Ultraschallpuls auf den gewünschten Bereich der Ableitschicht 42 angedrückt bzw. gebondet werden, so dass eine elektrische Verbindung zwischen der Ableitschicht 42 und der Kugel entsteht. Anschließend wird der Draht knapp oberhalb der Kugel abgeschert. Die verbleibende Kugel und der abgescherte Drahtrest bilden dann das Ableitelement 40 in Form eines dreidimensionalen Bondelements bzw. Stud-Bumps, das im dargestellten Ausführungsbeispiel eine sich nach oben verjüngende, dornförmige Form mit einer Spitze aufweist.

Anhand der Teil-Schnittansicht der Figur 5, die den Bereich des Masse-Kontaktierungsbereichs 30.8 in der erfindungsgemäßen Feuchtesensor-Anordnung zeigt, soll abschließend erläutert werden, wie dort die elektrisch leitende Verbindung zwischen der Ableitschicht 42 und dem Masse-Kontaktierungsbereichs 30.8 hergestellt wird. So ist hierzu vorgesehen, dass in einem Randbereich der Ableitschicht 42 ein Bondball 91.8 auf der Ableitschicht 42 angeordnet wird und über den mit dem Bondball 91.8 verbundenen Bonddraht 90.8 eine leitende Verbindung zum Masse-Kontaktierungsbereich 30.8 des Systemträgers 30 hergestellt wird. Im Bereich des Bondballs 91.8 ist die Passivierungsschicht 72 über der Verdrahtungsebene 71 entfernt und wird dort durch das Material der Ableitschicht 42 ersetzt. Auf diese Art und Weise kann auch der Masse-Anschluss des Signalverarbeitungsbausteins 70 über die Verdrahtungsebene 71, den Bondball 91.8 und den Bonddraht 90.8 mit dem Masse-Kontaktierungsbereich 30.8 des Systemträgers verbunden werden.

Alternativ hierzu wäre es auch möglich, anstelle einer einzigen Bondverbindung 90.8 zwei Bondverbindungen vorzusehen, um einerseits die Ableitelement 40 und die Ableitschicht 42 und andererseits den Masse-Anschluss des Signalverarbeitungsbausteins 70 mit dem Masse-Kontaktierungsbereich 30.8 des Systemträgers 30 zu verbinden. In diesem Fall wäre dann eine erste Bondverbindung von der Ableitschicht 42 zum Masse-Kontaktierungsbereich 30.8 erforderlich. Eine zweite Bondverbindung würde in einer ersten Variante die Verdrahtungs-Ebene 71 und damit den Masse-Anschluss des Signalverarbeitungsbausteins 70 mit dem Masse-Kontaktierungsbereich 30.8 des Systemträgers 30 verbinden. In einer zweiten Variante würde für die zweite Bondverbindung eine Anordnung ähnlich wie im Bereich des Bondballs 91.8 in Figur 5 vorgesehen, wobei dann der entsprechende Bereich der Ableitschicht 42 von der umgebenden Ableitschicht 42 zu isolieren wäre.

Neben dem konkret beschriebenen Ausführungsbeispiel und den bislang erläuterten Alternativen existieren im Rahmen der vorliegenden Erfindung selbstverständlich noch weitere Ausgestaltungsmöglichkeiten.

So ist nicht zwingend erforderlich, dass das vorgesehene Ableitelement wie im erläuterten Beispiel mittig in der Ausnehmung angeordnet ist, d.h. es könnte z.B. auch am Rand der Ausnehmung platziert werden. Wichtig ist hierbei primär, dass oberhalb des Ableitelements die Schutzschicht die geringste Dicke über die Ausnehmung aufweist.

Ebenso ist die erläuterte kreissegmentförmige Geometrie der Grund- und Deckelektroden des Feuchtesensors nicht erfindungswesentlich. **Es** könnten selbstverständlich auch andere Geometrien hierfür vorgesehen werden.

Ebenso könnte der Feuchtesensor lediglich eine Grund- und Deckelektrode oder aber mehr als zwei Grund- und Deckelektroden aufweisen.

Ferner ist möglich, den kapazitiven Feuchtesensor nicht als flächigen Plattenkondensator auszubilden, sondern die Elektroden als Interdigitalstruktur auszuführen, zwischen denen das feuchteempfindliche Dielektrikum platziert ist. Die Interdigitalstruktur könnte etwa in einer der Metallverdrahtungsebenen des Signalverarbeitungsbausteins werden.

## Patentansprüche

1. Feuchtesensor-Anordnung mit
- einem integrierten Signalverarbeitungsbaustein,
- mindestens einem auf dem Signalverarbeitungsbaustein angeordneten kapazitiven Feuchtesensor,
- einer Umkapselung, die den Signalverarbeitungsbaustein teilweise umgibt und im Bereich des Feuchtesensors eine Ausnehmung aufweist,
- mindestens einem elektrisch leitfähigen Ableitelement, das im Bereich der Ausnehmung angeordnet ist, wobei das Ableitelement (40) als dreidimensionales Bondelement ausgebildet ist, welches eine annähernd kreisförmige Grundfläche besitzt und sich nach oben verjüngt, und wobei
- in der Ausnehmung (20) über dem Feuchtesensor (60) das Bondelement sowie eine gasdurchlässige Schutzschicht (50) angeordnet sind, wobei die Schutzschicht (50) desweiteren elektrisch isolierend sowie wasserabweisend ausgebildet ist und sich über den gesamten Bereich der Ausnehmung (20) erstreckt.

2. Feuchtesensor-Anordnung nach Anspruch 1, wobei das Bondelement eine sich nach oben verjüngende dornförmige Form mit einer Spitze aufweist.

3. Feuchtesensor-Anordnung nach mindestens einem der vorhergehenden Ansprüche, wobei das Bondelement aus Gold oder Kupfer besteht.

4. Feuchtesensor-Anordnung nach Anspruch 1, wobei die Schutzschicht (50) über dem Bondelement die geringste Dicke aufweist.

5. Feuchtesensor-Anordnung nach Anspruch 4, wobei die Schutzschicht (50) in der Ausnehmung (20) eine maximale Dicke von 150µm aufweist.

6. Feuchtesensor-Anordnung nach mindestens einem der vorhergehenden Ansprüche, wobei das Bondelement eine leitende Verbindung zu einem Masse-Kontaktierungsbereich (30.8) eines Systemträgers (30) besitzt, um einen Entladestrom gegen Masse abzuleiten.

7. Feuchtesensor-Anordnung nach Anspruch 6, wobei auf dem Signalverarbeitungsbaustein (70) eine ganzflächige Passivierungsschicht (72) angeordnet ist und über der Passivierungsschicht (72) zumindest teilweise eine flächige, elektrisch leitfähige Ableitschicht (42) angeordnet ist, die einen Teil der leitenden Verbindung zwischen dem Bondelement und dem Masse-Kontaktierungsbereich (30.8) bildet.

8. Feuchtesensor-Anordnung nach Anspruch 7, wobei das Bondelement auf einem Teilbereich der Ableitschicht (42) angeordnet ist.

9. Feuchtesensor-Anordnung nach Anspruch 8, wobei eine leitende Verbindung zwischen der Ableitschicht (42) und dem Masse-Kontaktierungsbereich (30.8) des Systemträgers (30) über einen auf der Ableitschicht (42) angeordneten Bondball (91.8) und einen Bonddraht (90.8) zwischen dem Bondball (91.8) und dem Masse-Kontaktierungsbereich (30.8) ausgebildet ist.

10. Feuchtesensor-Anordnung nach Anspruch 7,mit einem kapazitiven Feuchtesensor (60), bestehend aus
- mindestens einer auf der Passivierungsschicht (72) des Signalverarbeitungsbausteins (70) angeordneten flächigen Grundelektrode (60.1a, 60.1b), die aus einem vom Teilbereich mit dem Bondelement getrennten Teilbereich der Ableitschicht (42) besteht, und
- einer über der Grundelektrode (60.1a, 60.1b) zumindest im Bereich der Ausnehmung (20) angeordneten Messschicht (60.3), deren Kapazität sich feuchteabhängig ändert, sowie
- mindestens einer oberhalb der Messschicht (60.3) angeordneten, gasdurchlässigen, flächigen Deckelektrode (60.2a, 60.2b).

11. Feuchtesensor-Anordnung nach Anspruch 10, wobei die Ausnehmung (20) einen kreisförmigen Querschnitt aufweist und die Grundelektrode (60.1a, 60.1b) und die Deckelektrode (60.2a, 60.2b) im Bereich der Ausnehmung (20) jeweils zwei Kreissegmente umfassen, die einander spiegelsymmetrisch gegenüberliegen.

## Claims

1. Moisture sensor arrangement, comprising
- an integrated signal processing module,
- at least one capacitive moisture sensor arranged on the signal processing module,
- an encapsulation that partially surrounds the signal processing module and has a recess in the region of the moisture sensor,
- at least one electrically conductive diverting element that is arranged in the region of the recess, wherein the diverting element (40) is in the form of a three-dimensional bond element that has an approximately circular base area and tapers upwardly, and wherein
- the bond element and a gas-permeable protective layer (50) are arranged above the moisture sensor (60) in the recess (20), wherein the protective layer (50) is also electrically insulating and water-repellent and extends over the entire region of the recess (20).

2. Moisture sensor arrangement according to Claim 1, wherein the bond element has an upwardly tapering mandrel-shaped form with a tip.

3. Moisture sensor arrangement according to at least one of the preceding claims, wherein the bond element consists of gold or copper.

4. Moisture sensor arrangement according to Claim 1, wherein the protective layer (50) has the smallest thickness above the bond element.

5. Moisture sensor arrangement according to Claim 4, wherein the protective layer (50) has a maximum thickness of 150 µm in the recess (20).

6. Moisture sensor arrangement according to at least one of the preceding claims, wherein the bond element has a conductive connection to an earth contacting region (30.8) of a system carrier (30) in order to divert a discharge current to earth.

7. Moisture sensor arrangement according to Claim 6, wherein a full-surface passivation layer (72) is arranged on the signal processing module (70) and a planar, electrically conductive diverting layer (42) is at least partially arranged over the passivation layer (72) and forms part of the conductive connection between the bond element and the earth contacting region (30.8).

8. Moisture sensor arrangement according to Claim 7, wherein the bond element is arranged on a partial region of the diverting layer (42).

9. Moisture sensor arrangement according to Claim 8, wherein a conductive connection between the diverting layer (42) and the earth contacting region (30.8) of the system carrier (30) is formed by way of a bond ball (91.8) arranged on the diverting layer (42) and a bond wire (90.8) between the bond ball (91.8) and the earth contacting region (30.8).

10. Moisture sensor arrangement according to Claim 7, comprising a capacitive moisture sensor (60), consisting of
- at least one planar bottom electrode (60.1a, 60.1b) that is arranged on the passivation layer (72) of the signal processing module (70) and that consists of a partial region of the diverting layer (42) that is separate from the partial region with the bond element, and
- a measurement layer (60.3) arranged above the bottom electrode (60.1a, 60.1b) at least in the region of the recess (20), the capacitance of which measurement layer changes in a manner dependent on moisture, and
- at least one gas-permeable, planar top electrode (60.2a, 60.2b) arranged above the measurement layer (60.3).

11. Moisture sensor arrangement according to Claim 10, wherein the recess (20) has a circular cross section and the bottom electrode (60.1a, 60.1b) and the top electrode (60.2a, 60.2b) each comprise two circular segments in the region of the recess (20) that are opposite one another in a mirror-symmetrical manner.

## Revendications

1. Arrangement capteur d'humidité comprenant
- un composant de traitement du signal intégré,
- au moins un capteur d'humidité capacitif disposé sur le composant de traitement du signal,
- un encapsulage qui entoure partiellement le composant de traitement du signal et possède un évidement dans la zone du capteur d'humidité,
- au moins un élément de dérivation électriquement conducteur, qui est disposé dans la zone de l'évidement, l'élément de dérivation (40) étant réalisé sous la forme d'un élément de soudage tridimensionnel qui possède une surface de base approximativement circulaire et se rétrécit vers le haut, et
- l'élément de soudage ainsi qu'une couche protectrice (50) perméable au gaz étant disposés dans l'évidement (20) au-dessus du capteur d'humidité (60), la couche protectrice (50) étant en outre réalisée électriquement isolante ainsi qu'hydrofuge et s'étendant sur toute la zone de l'évidement (20).

2. Arrangement capteur d'humidité selon la revendication 1, l'élément de soudage présentant une forme d'épine pourvue d'une pointe qui se rétrécit vers le haut.

3. Arrangement capteur d'humidité selon au moins l'une des revendications précédentes, l'élément de soudage étant constitué d'or ou de cuivre.

4. Arrangement capteur d'humidité selon la revendication 1, la couche protectrice (50) présentant l'épaisseur la plus faible au-dessus de l'élément de soudage.

5. Arrangement capteur d'humidité selon la revendication 4, la couche protectrice (50) dans l'évidement (20) présentant une épaisseur maximale de 150 µm.

6. Arrangement capteur d'humidité selon au moins l'une des revendications précédentes, l'élément de soudage possédant une connexion conductrice vers une zone de contact à la masse (30.8) d'un porte-système (30) afin de dériver un courant de décharge vers la masse.

7. Arrangement capteur d'humidité selon la revendication 6, une couche de passivation (72) qui recouvre toute la surface étant disposée sur le composant de traitement de signal (70) et une couche de dérivation (42) électriquement conductrice plane étant disposée au moins partiellement sur la couche de passivation (72), qui forme une partie de la connexion conductrice entre l'élément de soudage et la zone de contact à la masse (30.8).

8. Arrangement capteur d'humidité selon la revendication 7, l'élément de soudage étant disposé sur une zone partielle de la couche de dérivation (42).

9. Arrangement capteur d'humidité selon la revendication 8, une connexion conductrice étant formée entre la couche de dérivation (42) et la zone de contact à la masse (30.8) du porte-système (30) par le biais d'une perle de soudage (91.8) disposée sur la couche de dérivation (42) et un fil de soudage (90.8) entre la perle de soudage (91.8) et la zone de contact à la masse (30.8).

10. Arrangement capteur d'humidité selon la revendication 7, comprenant un capteur d'humidité capacitif (60) composé de
- au moins une électrode de base plane (60.1a, 60.1b) disposée sur la couche de passivation (72) du composant de traitement de signal (70), qui se compose d'une zone partielle de la couche de dérivation (42) séparée de la zone partielle avec l'élément de soudage, et
- une couche de mesure (60.3) disposée au-dessus de l'électrode de base (60.1a, 60.1b) au moins dans la zone de l'évidement (20), dont la capacité varie en fonction de l'humidité, ainsi que
- au moins une électrode de recouvrement (60.2a, 60.2b) plane, perméable aux gaz, disposée au-dessus de la couche de mesure (60.3).

11. Arrangement capteur d'humidité selon la revendication 10, l'évidement (20) présentant une section transversale circulaire et l'électrode de base (60.1a, 60.1b) et l'électrode de recouvrement (60.2a, 60.2b) dans la zone de l'évidement (20) comprenant respectivement deux segments de cercle qui sont opposés l'un à l'autre selon une symétrie en miroir.
